(19) **Europäisches Patentamt / European Patent Office / Office européen des brevets**

(11) **EP 1 536 150 B1**

(12) **EUROPEAN PATENT SPECIFICATION**

(45) Date of publication and mention
of the grant of the patent:
**19.05.2010 Bulletin 2010/20**

(51) Int Cl.:
***F16B 23/00*** *(2006.01)* ***B25B 15/00*** *(2006.01)*

(21) Application number: **02726501.6**

(22) Date of filing: **27.05.2002**

(86) International application number:
**PCT/JP2002/005119**

(87) International publication number:
**WO 2003/100272 (04.12.2003 Gazette 2003/49)**

(54) **Threaded fastener wrenching structure**

Struktur zum Verdrehen eines Gewindeelements

Structure pour entraîner un élément fileté en rotation

(84) Designated Contracting States:
**AT BE CH CY DE DK ES FI FR GB GR IE IT LI LU MC NL PT SE TR**

(43) Date of publication of application:
**01.06.2005 Bulletin 2005/22**

(73) Proprietor: **OSG Corporation**
**Toyokawa-shi,**
**Aichi 442-0005 (JP)**

(72) Inventor: **YAMAMOTO, Kouzou,**
**c/o OSG CORPORATION**
**Hoi-gun, Aichi 441-1202 (JP)**

(74) Representative: **TBK-Patent**
**Bavariaring 4-6**
**80336 München (DE)**

(56) References cited:
**EP-A- 1 010 900     GB-A- 2 048 738**
**JP-A- 2000 170 729   JP-A- 2001 280 324**
**US-A- 3 122 963      US-A- 4 503 737**

- **PATENT ABSTRACTS OF JAPAN vol. 2000, no. 09, 13 October 2000 (2000-10-13) & JP 2000 170729 A (OSG CORP), 20 June 2000 (2000-06-20)**

**Description**

Field of the Invention

The present invention relates to a threaded fastener wrenching structure, especially, to a threaded fastener and a wrenching tool to fasten even a small diameter threaded fastener of which the diameter of the thread portion is not larger than about 3 mm with large torque.

Description of Related Art

Wrenching is basically to fasten two or more parts or members integrally with converting a wrenching torque applied to a torque transmitting portion into a wrenching axial force. We must take a fitting state of the shape of the torque transmitting portion provided in the thread fastener and a wrenching tool such as a bit directly transmitting the wrenching torque into consideration as a set at all times. Recently many industrial products are led to lighter and smaller styles and parts for the products tend to be downsized. More downsizing and applying relatively high wrenching torque are required also for threaded fastener parts.

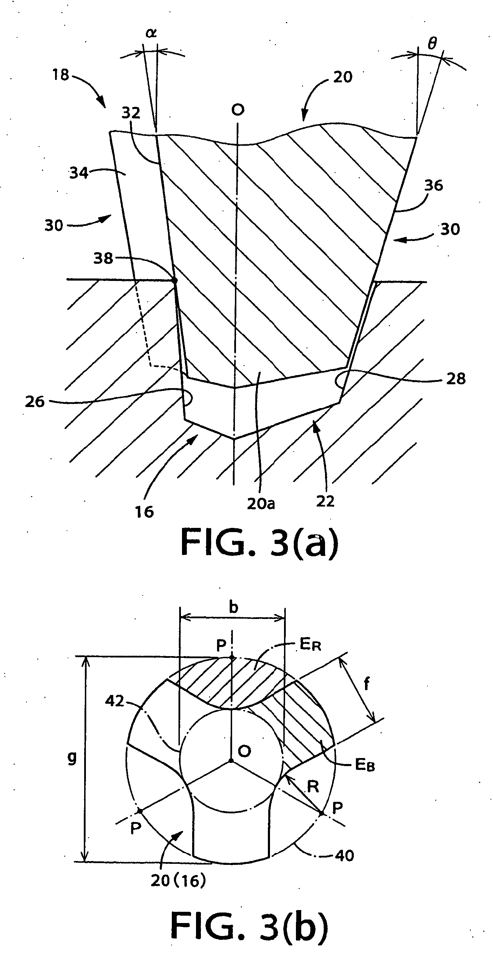

JP 3026965B discloses a threaded fastener wrenching structure including a fitting hole which is provided in one of a threaded fastener and a wrenching tool for wrenching the threaded fastener; and a fitting protrusion which is provided in the other of the threaded fastener and the wrenching tool and which is to be brought into fitting engagement with the fitting hole; wherein each of the fitting hole and protrusion is three-pronged shaped and has three torque transmitting portions which are angularly spaced apart from each other by 120 degrees about a centerline of the each of the fitting hole and protrusion and which project outwardly in a radial direction of the each of the fitting hole and protrusion, so that a wrenching torque is transmitted through the torque transmitting portions to the threaded fastener, as a result of rotation of the wrenching tool when the fitting hole and protrusion are held in fitting engagement with each other; (a) wherein each of the torque transmitting portions of each of the fitting hole and protrusion has a pair of side portions parallel with a direction in which the each of the torque transmitting portions projects away from the centerline; and each adjacent pair of the side portions of the torque transmitting portions are smoothly connected to each other through an arcuate portion which has a constant radius R of curvature and which is convexed toward the centerline; and (b) wherein each of the fitting hole and protrusion is shaped to satisfy both of the expressions (1) and (2) described below, where "g" represents a diameter of a circle circumscribed about radially outer ends of the three torque transmitting portions, while "b" represents a diameter of a circle inscribed in the three arcuate portions. The threaded fastener wrenching structure provides a small difference between the area of the inner side of the torque transmitting portion (corresponding to a member, $E_B$ in Fig. 3(b), of the fitting protrusion) and the area between the torque transmitting portions about the centerline (corresponding to a member, $E_R$ in Fig. 3(b), of the fitting hole). This balance of the fitting protrusion and hole in strength restrains the fitting protrusion from being damaged and the fitting hole from being deformed, and even small diameter threaded fastener, for example, of not larger than about 3 mm can be wrenched with higher wrenching torque.

$$0.5\ g \le b \le 0.6\ g \quad ...(1)$$

$$0.5\ b \le R \le 0.6\ b \quad ...(2)$$

The side surfaces of the fitting hole are formed as inclined flat surfaces for the diameter (the length from one end to the other end in the radial direction) of the fitting hole increases as viewed in a direction toward the opening. The side surfaces of the fitting protrusion are formed as inclined flat surfaces for the diameter of the fitting protrusion decreases as viewed in a direction toward the axially distal end of the fitting protrusion. The fitting hole has more gradual inclined surfaces than the fitting protrusion does. Then the axially distal end of the fitting protrusion is engaged with the fitting hole at an axially intermediate portion of the inclined surface of the fitting hole. Consequently the engagement may cause a partially damage on the fitting protrusion and a partially deformation of the fitting hole with large applied forces to the engaged part having a relatively small radial dimension upon wrenching. And the engagement also causes the wrenching tool to come out at an unstable state of the threaded fastener with a large component of force apart from the engaged part in the axial direction in proportion to the applied force to the engaged part. The more gradual incline (such as inclines of the outer peripheral end surfaces 28, 36 of the torque transmitting portions 22, 30 in Fig. 3) than the incline at the originally engaged part which is derived from deformation of the part causes the wrenching tool to be apt to come out upon engagement.

It is therefore an object of the present invention to provide a threaded fastener wrenching structure to restrain a partial deformation and damage of the engaged part of a fitting hole and a fitting protrusion provided in a threaded fastener and a wrenching tool for wrenching the threaded fastener and to wrench them by higher wrenching torque.

SUMMARY OF THE INVENTION

The object indicated above may be achieved by a threaded fastener wrenching structure according to claim 1.

Further developments of the invention are subject matter of the dependent claims.

According to a first aspect of the invention, the fitting protrusion has an inclined engager portion at which a diameter of the fitting protrusion is reduced as viewed in a direction toward an axially distal end of the fitting protrusion, and in that the fitting protrusion is brought into engagement at an axially intermediate portion of the inclined engager portion with an opening edge of the fitting hole. The diameter dimension of the engaged part is larger than that in the intermediate of the fitting hole engaged with the tip portion in the axial direction of the fitting protrusion in the conventional case, and a smaller force is applied by the constant wrenching torque to the engaged part in inverse proportion to the larger diameter dimension. This restrains a partial damage or a deformation of the fitting protrusion and hole at the engaged part or allows the threaded fastener to efficiently be wrenched by higher wrenching torque. A smaller applied force to the engaged part causes stably wrenched state of the threaded fastener as a result of a small component of force in the axial direction to force apart along the inclination of the inclined engager portion, namely, restraining the threaded fastener wrenching tool from coming out of the fitting hole.

According to a second aspect of the invention, each of the torque transmitting portions of each of the fitting hole and protrusion has a pair of side portions parallel with a direction in which the each of the torque transmitting portions projects away from the centerline; that each adjacent pair of the side portions of the torque transmitting portions are smoothly connected to each other through an arcuate portion which has a constant radius R of curvature and which is convexed toward the centerline, and each of the fitting hole and protrusion is shaped to satisfy both of the expressions (1) and (2), where g represents a diameter of a circle circumscribed about radially outer ends of the three torque transmitting portions, b represents a diameter of a circle inscribed in the three arcuate portions and R represents a curvature radius of the arcuate portion. This restrains both of a damage of the fitting protrusion and a deformation of a fitting hole and provides the threaded fastener and the wrenching tool for wrenching the threaded fastener by high wrenching torque.

$$0.5\,g \leq b \leq 0.6\,g \quad \ldots (1)$$

$$0.5\,b \leq R \leq 0.6\,b \quad \ldots (2)$$

The three-pronged shape satisfying the expressions (1) and (2) allows threaded fastener wrenching structure to provide a small difference between the area of the inner side of the torque transmitting portion (corresponding to a member, $E_B$ in Fig. 3(b), of the fitting protrusion) and the area between the torque transmitting portions about the centerline (corresponding to a member, $E_R$ in Fig. 3(b), of the fitting hole). This balance of the fitting protrusion and hole in strength restrains the fitting protrusion from being damaged and the fitting hole from being deformed.

The concrete numerical values are shown as follows. The adjacent side portions of the adjacent torque transmitting portions of the three-pronged shape fitting protrusion and hole are smoothly connected to each other through an arcuate portion having a constant curvature radius R. The curvature radius R is not smaller than 50% of the diameter b of the inscribed circle, in other words, not smaller than 25% of the diameter g of the circumscribed circle. This especially prevents stress concentration at the base portion of the torque transmitting portion of the fitting protrusion. The curvature radius R is not larger than 60% of the diameter b of the inscribed circle, namely, not larger than 36% of the diameter g of the circumscribed circle and then each torque transmitting portion has the linear side portions which are parallel to the projecting direction and the wrenching torque is efficiently transmitted. Meanwhile, because the diameter b of the inscribed circle is not smaller than 50% of the diameter g of the circumscribed circle, high mechanical strength is obtained by sufficient thickness of the fitting protrusion. At the same time, for it is not larger than 60%, the sufficient projecting dimension of the torque transmitting portion allows the wrenching torque to be efficiently transmitted and restrains a deformation of the fitting hole.

According to a third aspect of the invention, the inclination angle $\alpha$ of the inclined engager portion of the fitting protrusion is not larger than 8°, and the inclination angle $\beta$ of the fitting hole is not larger than both of 8° and $\alpha$. This

produces large static friction between them. And this allows the threaded fastener to be securely held (attached) in the threaded fastener wrenching tool and automatic wrenching of the threaded fastener by a robot. It is said that the coefficient of static friction between members of steel is generally not larger than 0.14, and considering the fact of tan 8° = 0.1405, an appropriate static friction will be realized with the inclination angle $\alpha$ being not larger than 8° for a steel threaded fastener and a steel threaded fastener wrenching tool.

According to a fourth aspect of the invention, applied for a small diameter threaded fastener of which the thread portion of it is not larger than 3 mm, the threaded fastener wrenching structure causes broken forces applied to the engaged parts of the fitting protrusion and hole. Consequently this restrains a damage or a deformation of them and provides the threaded fastener and the wrenching tool for efficiently wrenching the threaded fastener by high wrenching torque.

In general, the threaded fastener structure is provided with a threaded fastener having a fitting hole (recess) and a threaded fastener wrenching tool having a fitting protrusion (wing portion). To the contrary the threaded fastener structure may be provided with a threaded fastener having a fitting protrusion and a threaded fastener wrenching tool having a fitting hole. The thread of the threaded fastener may be an external or internal thread.

The fitting protrusion has an inclined engager portion at which a diameter of the fitting protrusion is reduced as viewed in a direction toward an axially distal end of the fitting protrusion. Portions other than the inclined engager portion may, however, not be inclined and the fitting hole may be provided substantially parallel to the axial direction. Notwithstanding gradients for parting to be a larger diameter as directing to the opening side may preferably be provided upon the fitting hole forming by forging and inclinations to be a smaller diameter as directing to the tip side in the axial direction may preferably be provided upon the fitting protrusion forming in accordance with the fitting hole.

The inclination angle $\alpha$ of the inclined engager portion of the fitting protrusion and the inclination angle $\beta$ of the engaged part, namely, the opening edge of the fitting hole which is engaged with the inclined engager portion may preferably be set as, for example, not larger than 8° according to the third aspect of the invention when considering the attachability. The non-engaged portions other than these engaged portions, for example, the outer peripheral end surface of the torque transmitting portion may preferably be inclined at about 10° - 20° of an inclination angle with considering such as forging formability upon forming of the inclined engager portion at the arcuate portion of the torque transmitting portion. The inclination angle $\alpha$ may preferably be set such as not smaller than 3° for certainly engaging with the opening edge of the fitting hole despite the dimensional tolerance. Regarding the inclination angle $\beta$, the difference between $\alpha$ and ($\alpha$ - $\beta$) may preferably be set as not larger than 2°, more preferably as not larger that 1° for efficiently attachability.

According to the second aspect of the invention, it is not necessary that every portion of the fitting protrusion and hole satisfies the expressions (1) and (2). At least the engaged parts through which the wrenching torque is transmitted, namely, the opening edge of the fitting hole and the engaged part of the fitting protrusion engaged with the opening edge of the fitting hole may satisfy the expressions (1) and (2).

The present invention may preferably be applied especially to the threaded fastener wrenching tool for a small diameter threaded fastener of which the diameter of the thread is not larger than about 3 mm. The diameter dimension of that kind of the threaded fastener is so small that the wrenching torque is difficult to be obtained. In addition the present invention may be applied to the threaded fastener wrenching tool also for a threaded fastener of which the diameter of the thread is not smaller than 3 mm.

BRIEF DESCRIPTION OF THE DRAWINGS

Fig. 1(a) illustrates a small diameter threaded fastener according to the invention in a plan view as seen from the head portion side and Fig. 1(b) illustrates the same in a partly omitted front view;
Fig. 2(a) illustrates a recess provided in the small diameter threaded fastener in Fig. 1 in a plan view and Fig. 2(b) illustrates the same in a sectional view along with the line B-B of Fig. 2(a); and
Fig. 3(a) illustrates the engaged state of the recess and the fitting protrusion of the bit in Fig. 2 in a sectional view including the centerline O and Fig. 3(b) illustrates the same in a sectional view cut at the engaged part with a level surface perpendicular to the centerline O.

DETAILED DESCRIPTION OF EXEMPLARY EMBODIMENTS

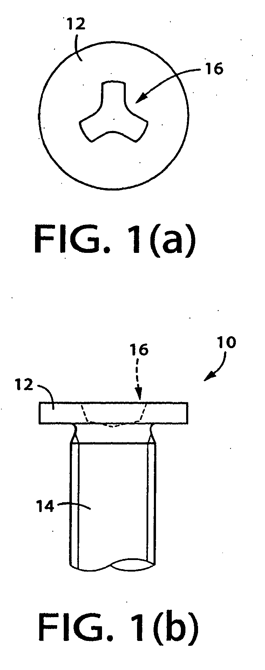

Hereinafter, there will be described a threaded fastener wrenching structure, a threaded fastener and a wrenching tool by reference to the drawings. Fig. 1(a) illustrates a small diameter threaded fastener 10 according to the invention in a plan view as seen from a head portion 12 side and Fig. 1(b) illustrates the same in a partly omitted front view. The thread fastener 10 is provided with an external thread 14 of M0.8 x 0.2 as a thread portion and a recess 16 in the head portion 12 as a fitting hole for wrenching. The head portion 12 has about 1.4 mm diameter and about 0.2 mm thickness.

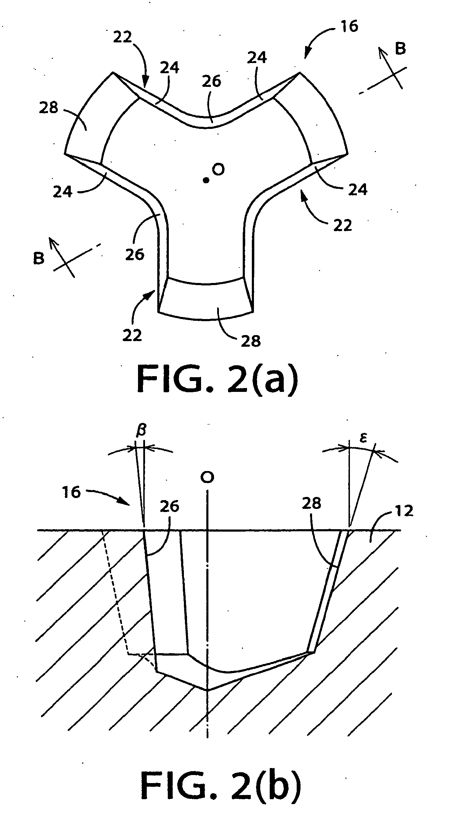

Fig. 2(a) illustrates the recess 16 in an enlarged plan view and Fig. 2(b) illustrates the same in a sectional view along with the line B-B of Fig. 2(a). Fig. 3(a) illustrates the engaged state of the recess 16 and the tip portion 20a of the fitting protrusion 20, which is in the recess 16, on the tip side of a bit 18 as a wrenching tool in a sectional view as Fig. 2(b) including the centerline O. Fig. 3(b) illustrates the same in a sectional view cut at the engaged part with a level surface perpendicular to the centerline O. The centerline O passes through the center of the recess 16 and the fitting protrusion 20 and coincides with the axis of the threaded fastener 10. As shown in these figures, the recess 16 is formed to have a three-pronged shape including three torque transmitting portions 22 which are angularly spaced apart from each other by 120 degrees about a centerline O of each of the fitting hole and protrusion and which project outwardly in a radial direction of each of the fitting hole and protrusion. The torque transmitting portion 22 has a pair of linear side portions 24 parallel with a direction in which each of the torque transmitting portions projects away from the centerline O. Each adjacent pair of side portions 24 of the adjacent torque transmitting portions 22 are smoothly connected to each other through an arcuate portion 26 having a constant curvature radius R. The fitting protrusion 20 has the similar section cut along a surface perpendicular to the centerline O to the recess 16 and is also formed to have a three-pronged shape including three torque transmitting portions 30 which are angularly spaced apart from each other by 120 degrees about a centerline O of each of the fitting hole and protrusion and which project outwardly in a radial direction of each of the fitting hole and protrusion. The torque transmitting portion 30 has a pair of linear side portions 34 parallel with a direction in which each of the torque transmitting portions projects away from the centerline O. Each adjacent pair of side portions 34 of the adjacent torque transmitting portions 30 are smoothly connected to each other through an arcuate portion 32 having the same constant curvature radius R as the arcuate portion 26.

The arcuate portion 26 of the recess 16 has an inclined surface inclined outwardly at an inclination angle β from the centerline O as upward, then a diameter of a virtual circle including the arcuate portion 26 increases as directing toward an opening side of the recess 16 in the axial direction (upward in Fig. 2(b) and Fig. 3(a)). The arcuate portion 32 of the fitting protrusion 20 has an inclined surface inclined inwardly at an inclination angle α from the centerline O as downward, then a diameter of a virtual circle including the arcuate portion 32 decreases as directing toward a tip side of the fitting protrusion 20 in the axial direction (downward in Fig. 3(a)). The inclination angle α is larger than the inclination angle β and α is about 6°30' and β is about 5°45' in this embodiment. As shown in Fig. 3(a), the arcuate portion 32 of the fitting protrusion 20 engages with the arcuate portion 26 at the edge of the opening of the recess 16, namely, at an upward point in the axial direction from the bottom of the recess 16 and the wrenching torque is transmitted through the arcuate portions 32, 26 and the side portions 34, 24. The arcuate portions 32 are functioned as an inclined engager portion.

The end portion 28 of the torque transmitting portion 22 has an inclined surface inclined outwardly at an inclination angle ε from the centerline O as upward, then a diameter of a virtual circle including the end portion 28 increases as directing toward an opening side of the recess 16 in the axial direction. And the end portion 36 of the torque transmitting portion 30 has an inclined surface inclined inwardly at an inclination angle θ from the centerline O as downward to a tip portion 20a, then a diameter of a virtual circle including the end portion 36 decreases as directing toward a tip side of the fitting protrusion 20 in the axial direction. The angles ε and θ are set as about 15°.

The section of the fitting protrusion 20 at the engaged part 38 of the recess 16 and the fitting protrusion 20, namely, the opening edge portion of the recess 16 in Fig. 3(a) is shown as the three-pronged shape contoured by the solid line in Fig. 3(b). An outside area of the three-pronged shape substantially represents the section of the head portion 12 having the recess 16. In Fig. 3(b), g represents a diameter of a circle 40 circumscribed about radially outer ends of the three torque transmitting portions 22, 30, b represents a diameter of a circle 42 inscribed in the three arcuate portions 26, 32, and P represents a center of curvature of the arcuate portion 26, 32 with the curvature radius R. In this embodiment the diameter g is set as g ≈ 1.24 mm, the diameter b = 0.5 g ≈ 0.62 mm and the curvature radius R = 0.5 b = 0.25 g ≈ 0.31 mm. The width f of the torque transmitting portion 22 is calculated according to the expression (6) below as f ≈ 0.45 mm in the embodiment. The dimension of the outwardly projected part of the torque transmission portion 22 of the recess 16 is slightly larger than that of the torque transmission portion 30 of the fitting protrusion 20 for engaging the arcuate portion 32 with the arcuate portion 26 as apparent in Fig. 3(a). The circle circumscribed about the radially outer end of the torque transmission portion 22 of the recess 16 is larger than the circumscribed circle 40 in Fig. 3(b) in a strict manner.

$$f = g \cdot \sin 60^{\circ} - 2R \quad ... (6)$$

The fitting protrusion 20 and the recess 16 of the threaded fastener wrenching structure, the small diameter thread fastener 10 or the bit 18 are fit with each other and both formed as a three-pronged shape in its section cut along the radial direction. The adjacent side portions 24, 34 of the adjacent torque transmitting portions 22, 30 of the three-pronged shape fitting protrusion 20 and recess 16 are smoothly connected to each other through an arcuate portion 26, 32 respectively. The diameter b = 0.5 g and the curvature radius R = 0.5 b restrain a damage of the fitting protrusion 20 and a deformation of the recess 16 and allow the small diameter threaded fastener to wrench by high wrenching torque.

That is, the setting of b = 0.5 g and R = 0.5 b balances the strengths of the fitting protrusion 20 and the recess 16 as a result of a small difference of the inner area of the torque transmitting portion 22, 30, namely, the area $E_B$ of the torque transmitting portion 30 of the fitting protrusion 20 and the intermediate area $E_R$ (corresponding to parts of the recess 16) between the torque transmitting portions 22, 30.

The adjacent side portions 24, 34 of the adjacent torque transmitting portions 22, 30 of the three-pronged shape fitting protrusion 20 and recess 16 are smoothly connected to each other through an arcuate portion 26, 32 having a constant curvature radius R. The curvature radius R is 50% of the diameter b of the inscribed circle 42 and 25% of the diameter g of the circumscribed circle 40. Consequently the wrenching torque is efficiently transmitted as a result of especially preventing stress concentration at the base portion of the torque transmitting portion 30 of the fitting protrusion 20 and having the linear side portions 24, 34 of each torque transmitting portion 22, 30 which are parallel to the projecting direction. Meanwhile, the diameter b of the inscribed circle 42 is 50% of the diameter g of the circumscribed circle 40 and, consequently, high mechanical strength is obtained by sufficient thickness of the fitting protrusion 20. At the same time the sufficient projecting dimension of the torque transmitting portion 22, 30 allows the wrenching torque to be efficiently transmitted and restrains the deformation of the recess 16.

The arcuate portion 32 of the fitting protrusion 20 inclines at the inclination angle $\alpha \approx 6° \ 30'$ and the arcuate portion 26 of the recess 16 inclines at the inclination angle $\beta \approx 5° \ 45'$. Engagement of the axial intermediate portion of the fitting protrusion 20 and the recess 16 at the opening edge produces large static friction between them. This allows the small diameter threaded fastener 10 to be securely held (attached) by the bit 18 and automatic wrenching of the small diameter threaded fastener 10 by a robot. The small diameter threaded fastener 10 and the bit 18 are respectively made of a certain kind of steel. The threaded fastener 10 is made of such as carbon steel and the bit 18 is made of such as chromium molybdenum steel or High Speed Steel. It is said that the coefficient of static friction of them is generally not larger than 0.14, and considering the fact of tan 8° = 0.1405, an appropriate static friction is realized in the present embodiment of the inclination angle $\alpha \approx 6° \ 30'$ and the inclination angle $\beta \approx 5° \ 45'$.

While the arcuate portion 26 of the recess 16 inclines at the inclination angle $\beta \approx 5° \ 45'$, the end surface 28 of the torque transmitting portion 22 inclines at the inclination angle $\varepsilon \approx 15°$ and the recess 16 is easily and precisely formed by forging. The inclinations serve as the gradients for parting and they facilitate the parting of the punch from the recess 16 after forging to precisely forge a predetermined shape of the recess 16.

Apparent in Fig. 2(a) of the plan view, with the inclined arcuate portion 26 at the inclination angle $\beta$ both of the side portions (side surfaces) 24 of the torque transmitting portion 22 inclines toward the outer direction, namely, radially and extendingly about the centerline O. Consequently the coming-out component to thrust the fitting protrusion 20 out of the recess 16 is produced when the wrenching torque is applied by engagement of the side portions 24 with the side portions 34 of the fitting protrusion 20. However, the wrenching torque is efficiently transmitted because the inclination angle in the radial direction at the side portion 24 is sufficiently smaller than the inclination angle $\beta \approx 5° \ 45'$ and little effective. The arcuate portion 26 of the recess 16 has the same curvature radius R at the bottom as that at the opening of an upward end and it is about 0.31mm.

Requiring of a special tool such as the bit 18 for unwrenching the small diameter threaded fastener 10 having the three pronged shape recess 16 prevents the public or persons unconcerned from unwrenching them with ease. It is effective against a kind of mischief.

In the present embodiment the inclination angle $\alpha$ of the arcuate portion 32 of the fitting protrusion 20 is larger than the inclination angle $\beta$ of the arcuate portion 26 of the recess 16 and the wrenching torque is transmitted through the intermediate portion of the fitting protrusion 20 in the axial direction engaged with the opening edge of the recess 16. As a result, the diameter dimension of the engaged part 38 is larger than that in the intermediate of the recess 16 engaged with the tip portion 20a of the fitting protrusion 20 in the conventional case of $\alpha < \beta$, and a smaller force is applied by the constant wrenching torque to the engaged part 38 in inverse proportion to the larger diameter dimension. This restrains a partial damage or a deformation of the fitting protrusion 20 and the recess 16 at the engaged part 38 or allows the small diameter threaded fastener 10 to be efficiently wrenched by higher wrenching torque. A smaller applied force to the engaged part 38 causes stably wrenched state of the small diameter threaded fastener 10 as a result of a small component force in the axial direction to force apart along the inclination of the arcuate portion 32, namely, restraining the bit 18 from coming out of the recess 16.

It is to be understood that the present invention may be embodied with other changes, improvements, and modifications that may occur to a person skilled in the art without departing from the scope of the invention defined in the appended claims.

Industrial Use

As described above, the present invention provides a threaded fastener wrenching structure to restrain a partial deformation and damage of the engaged part of a fitting hole and a fitting protrusion provided in a threaded fastener and a wrenching tool for wrenching the threaded fastener and to wrench them by higher wrenching torque.

**Claims**

1. A threaded fastener wrenching structure comprising:

a fitting hole (16) provided in one of a threaded fastener (10) and a wrenching tool (18) for wrenching the threaded fastener (10); and
a fitting protrusion (20) provided in the other of the threaded fastener (10) and the wrenching tool (18) and is especially configured as to be brought into fitting engagement with the fitting hole (16);

wherein the fitting hole (16) and the fitting protrusion (20) are of three-pronged shape and respectively have three torque transmitting portions (22, 30) which are angularly spaced apart from each other by 120 degrees about a centerline (O) of both the fitting hole (16) and the fitting protrusion (20) and which project outwardly in a radial direction thereof, so that a wrenching torque by rotation of the wrenching tool (18) is transmitted through the torque transmitting portions (22, 30) to the threaded fastener (10), when the fitting hole (16) and the fitting protrusion (20) are held in fitting engagement with each other,
wherein the fitting protrusion (20) has an inclined engager portion at which a diameter is reduced toward an axially distal end of the fitting protrusion (20),
the torque transmitting portions (22) of the fitting hole (16) have adjacent side portions (24) smoothly connected through arcuate portions (26) convexed toward the centerline (O); and
the torque transmitting portions (30) of the fitting protrusions (20) have adjacent side portions (34) being smoothly connected through arcuate portions (32) convexed toward the centerline (O), and engaging with the side portions (24) of the torque transmitting portions (22) upon transmitting the wrenching force; and the threaded fastener wrenching structure being
**characterized in that**
the inclined engager portion is provided in the arcuate portion (32) of the fitting protrusion (20) and is at an axially intermediate portion thereof brought into engagement with the arcuate portion (26) of an opening edge of the fitting hole (16), upon inserting the fitting protrusion (20) into the fitting hole (16).

2. The threaded fastener wrenching structure according to claim 1,
**characterized in that**
a pair of side portions (24) of the torque transmitting portions (22) of the fitting hole (16) and a pair of side portions (34) of the torque transmitting portion (30) of the fitting protrusion (20) are both parallel with a direction in which the torque transmitting portions (22, 30) project away from the centerline (O);
that the arcuate portion (26) smoothly connecting the adjacent pair of the side portions (24) of the torque transmitting portions (22) of the fitting hole (16) and the arcuate portion (32) smoothly connecting the adjacent pair of the side portions (34) of the torque transmitting portions (30) of the fitting protrusion (20) both have a constant radius R of curvature and are convexed toward the centerline (O);
and that both of the following expressions (1) and (2) are satisfied:

$$0.5\ g \leq b \leq 0.6\ g \quad \ldots(1)$$

$$0.5\ b \leq R \leq 0.6\ b \quad \ldots(2)$$

where "g" represents a diameter of a circle (40) circumscribed about radially outer ends (36) of the three torque transmitting portions (30) of the fitting protrusions (20), while "b" represents a diameter of a circle (42) inscribed in the three arcuate portions (26) of the fitting holes (16).

3. The threaded fastener wrenching structure according to any one of claims 1 or 2,
**characterized in that**
the fitting hole (16) and the fitting protrusion (20) are shaped to satisfy all of the following expressions (3), (4) and (5):

$$0° < \alpha \leq 8° \quad \ldots(3)$$

$$0° \leq \beta < 8° \quad \ldots(4)$$

$$\beta < \alpha \quad \ldots(5)$$

where "$\alpha$" represents an angle of inclination of the inclined engager portion with respect to the centerline (O), while "$\beta$" represents an angle of inclination of the arcuate portion (26) of the fitting hole (16) to be brought into engagement with the inclined engager portion with respect to the centerline (O).

4. The threaded fastener wrenching structure according to any one of claims 1 to 3,
   **characterized in that**
   a diameter of a thread of the threaded fastener (10) is not larger than 3 mm.

5. The threaded fastener wrenching structure according to any one of claims 1 to 4,
   **characterized in that**
   the threaded fastener (10) is provided with the fitting hole (16), while the wrenching tool (18) is provided with the fitting protrusion (20).

**Patentansprüche**

1. Schraubenschlüsselaufbau für Verbindungselement mit Gewinde mit:

   einem Passloch (16), das in einem von einem Verbindungselement (10) mit Gewinde und einem Schraubenschlüssel (18) zum Festziehen des Verbindungselements (10) mit Gewinde vorgesehen ist; und
   einem Passvorsprung (20), der in dem anderen von dem Verbindungselement (10) mit Gewinde und dem Schraubenschlüssel (18) vorgesehen ist und speziell ausgebildet ist, um in Passeingriff mit dem Passloch (16) gebracht zu werden;

   wobei das Passloch (16) und der Passvorsprung (20) von dreizackiger Form sind und jeweils drei Drehmomentübertragungsabschnitte (22, 30) haben, die winkelmäßig voneinander um 120 Grad um eine Mittellinie (O) von sowohl dem Passloch (16) als auch dem Passvorsprung (20) beabstandet sind und die in einer radialen Richtung nach außen vorstehen, sodass ein Anziehmoment durch eine Drehung des Schraubenschlüssels (18) durch die Drehmomentübertragungsabschnitte (22, 30) an das Verbindungselement (10) mit Gewinde übertragen wird, wenn das Passloch (16) und der Passvorsprung (20) in Passeingriff miteinander gehalten werden, wobei
   der Passvorsprung (20) einen geneigten Eingriffsabschnitt hat, an dem ein Durchmesser zu einem axial körperfernen Ende des Passvorsprungs (20) hin verringert ist,
   die Drehmomentübertragungsabschnitte (22) des Passlochs (16) benachbarte Seitenabschnitte (24) haben, die durch gebogene Abschnitte (26) sanft verbunden sind, welche zu der Mittellinie (O) hin konvex gebogen sind; und
   die Drehmomentübertragungsabschnitte (30) der Passvorsprünge (20) benachbarte Seitenabschnitte (34) haben, die durch gebogene Abschnitte (32) sanft miteinander verbunden sind, welche zu der Mittellinie (O) hin konvex gebogen sind, und mit den Seitenabschnitten (24) der Drehmomentübertragungsabschnitte (22) in Folge einer Übertragung der Anziehkraft eingreifen; und wobei der Schraubenschlüsselaufbau für Verbindungselemente mit Gewinde
   **dadurch gekennzeichnet ist, dass**
   der geneigte Eingriffsabschnitt in dem gebogenen Abschnitt (32) des Passvorsprungs (20) vorgesehen ist und an seiner axial mittleren Position mit dem gebogenen Abschnitt (26) einer Öffnungskante des Passlochs (16) in Folge des Einführens des Passvorsprungs (20) in das Passloch (16) in Eingriff gebracht wird.

2. Schraubenschlüsselaufbau für Verbindungselement mit Gewinde gemäß Anspruch 1,
   **dadurch gekennzeichnet, dass**
   ein Paar von Seitenabschnitten (24) der Drehmomentübertragungsabschnitte (22) des Passlochs (16) und ein Paar von Seitenabschnitten (34) des Drehmomentübertragungsabschnitts (30) des Passvorsprungs (20) beide parallel in einer Richtung sind, in der die Drehmomentübertragungsabschnitte (22, 30) von der Mittellinie (O) weg vorstehen; dass der gebogene Abschnitt (26), der das benachbarte Paar der Seitenabschnitte (24) der Drehmomentübertragungsabschnitte (22) des Passlochs (16) sanft verbindet, und der gebogene Abschnitt (32), der das benachbarte Paar der Seitenabschnitte (34) der Drehmomentübertragungsabschnitte (30) des Passvorsprungs (20) sanft verbindet, beide einen konstanten Krümmungsradius R haben und zu der Mittellinie (O) hin konvex gebogen sind; und dass beide der folgenden Ausdrücke (1) und (2) erfüllt sind:

$$0,5\ g \le b \le 0,6\ g \qquad \ldots(1)$$

$$0,5\ b \le R \le 0,6\ b \qquad \ldots(2)$$

wobei "g" einen Durchmesser eines Umkreises (40) um die radial äußeren Enden (36) der drei Drehmomentübertragungsabschnitte (30) des Passvorsprungs (20) darstellt, während "b" einen Durchmesser eines Inkreises (42) im Inneren der drei gebogenen Abschnitte (26) der Passlöcher (16) darstellt.

3. Schraubenschlüsselaufbau für Verbindungselement mit Gewinde gemäß einem der Ansprüche 1 oder 2, **dadurch gekennzeichnet, dass** das Passloch (16) und der Passvorsprung (20) geformt sind, um alle der folgenden Ausdrücke (3), (4) und (5) zu erfüllen:

$$0° < \alpha \le 8° \qquad \ldots(3)$$

$$0° \le \beta < 8° \qquad \ldots(4)$$

$$\beta < \alpha \qquad \ldots(5)$$

wobei "$\alpha$" einen Neigungswinkel des geneigten Eingriffsabschnitts in Bezug auf die Mittellinie (O) darstellt, während "$\beta$" einen Neigungswinkel des gebogenen Abschnitts (26) des Passlochs (16), der mit dem geneigten Eingriffsabschnitt in Eingriff zu bringen ist, in Bezug auf die Mittellinie (O) darstellt.

4. Schraubenschlüsselaufbau für Verbindungselement mit Gewinde gemäß einem der Ansprüche 1 bis 3, **dadurch gekennzeichnet, dass** ein Durchmesser eines Gewindes des Verbindungselements (10) mit Gewinde nicht größer als 3 mm ist.

5. Schraubenschlüsselaufbau für Verbindungselement mit Gewinde gemäß einem der Ansprüche 1 bis 4, **dadurch gekennzeichnet, dass** das Verbindungselement (10) mit Gewinde mit dem Passloch (16) versehen ist, während der Schraubenschlüssel (18) mit dem Passvorsprung (20) versehen ist.

**Revendications**

1. Structure de serrage d'un élément de fixation fileté comprenant :

un trou d'ajustement (16) pourvu dans l'un d'un élément de fixation fileté (10) et d'un outil de serrage (18) pour serrer l'élément de fixation fileté (10) ; et
une protubérance d'ajustement (20) pourvue dans l'autre de l'élément de fixation fileté (10) et de l'outil de serrage (18) et est spécialement configurée de sorte à être mise en engagement d'ajustement avec le trou d'ajustement (16) ;

où le trou d'ajustement (16) et la protubérance d'ajustement (20) ont une forme à trois ergots et possèdent respectivement trois parties (22, 30) de transmission de couple qui sont écartées entre elles de manière angulaire à environ 120 degrés autour d'une ligne centrale (O) du trou d'ajustement (16) et de la protubérance d'ajustement (20) et qui se projettent vers l'extérieur dans une direction radiale correspondante, de sorte qu'un couple de serrage par la rotation de l'outil de serrage (18) est transmis à travers les parties (22, 30) de transmission de couples à l'élément de fixation fileté (10), lorsque le trou d'ajustement (16) et la protubérance d'ajustement (20) sont maintenus en engagement d'ajustement l'un avec l'autre,

où la protubérance d'ajustement (20) possède une partie d'engagement inclinée à laquelle un diamètre est réduit vers une extrémité axialement distale de la protubérance d'ajustement (20),

les parties (22) de transmission de couples du trou d'ajustement (16) possèdent des parties latérales adjacentes (24) reliées de manière continue à travers des parties arquées (26) qui sont convexes vers la ligne centrale (O) ; et les parties (30) de transmission de couples des protubérances d'ajustement (20) possèdent des parties latérales adjacentes (34) qui sont reliées de manière continue à travers des parties arquées (32) qui sont convexes vers la ligne centrale (O), et s'engageant avec les parties latérales (24) des parties (22) de transmission de couple dès la transmission de la force de serrage ; et la structure de serrage de l'élément de fixation fileté étant **caractérisée en ce que**

la partie d'engagement inclinée est pourvue dans la partie arquée (32) de la protubérance d'ajustement (20) et est, à une partie axialement intermédiaire correspondante, amenée en engagement avec la partie arquée (26) d'un bord d'ouverture du trou d'ajustement (16), dès l'insertion de la protubérance d'ajustement (20) dans le trou d'ajustement (16).

**2.** Structure de serrage d'un élément de fixation fileté selon la revendication 1, **caractérisée**

**en ce qu'**une paire de parties latérales (24) des parties (22) de transmission de couple du trou d'ajustement (16) et une paire de parties latérales (34) de la partie (30) de transmission de couple de la protubérance d'ajustement (20) sont parallèles à une direction dans laquelle les parties (22, 30) de transmission de couple se projettent loin de la ligne centrale (O) ;

**en ce que** la partie arquée (26) reliant de manière continue la paire adjacente des parties latérales (24) des parties (22) de transmission de couple du trou d'ajustement (16) et la partie arquée (32) reliant de manière continue la paire adjacente des parties latérales (34) des parties (30) de transmission de couple de la protubérance d'ajustement (20) possèdent un rayon constant R de courbure et sont convexes vers la ligne centrale (O) ;

et **en ce que** les expressions (1) et (2) suivantes sont satisfaites :

$$0.5\ g \le b \le 0{,}6\ g \ \dots \ (1)$$

$$0{,}5\ b \le R \le 0{,}6\ b \ \dots \ (2)$$

où "g" représente un diamètre d'un cercle (40) circonscris autour d'extrémités radialement externes (36) des trois parties (30) de transmission de couple des protubérances d'ajustement (20), tandis que "b" représente un diamètre d'un cercle (42) inscris dans les trois parties arquées (26) des trous d'ajustement (16).

**3.** Structure de serrage d'un élément de fixation fileté selon l'une quelconque des revendications 1 ou 2, **caractérisée en ce que**

le trou d'ajustement (16) et la protubérance d'ajustement (20) sont formés pour satisfaire toutes les expressions (3), (4) et (5) suivantes :

$$0° < \alpha \le 8° \ \dots \ (3)$$

$$0° \le \beta < 8° \ \dots \ (4)$$

$$\mathrm{B} < \alpha \ \dots \ (5)$$

où "α" représente un angle d'inclinaison de la partie d'engagement inclinée par rapport à la ligne centrale (O), tandis que "β" représente un angle d'inclinaison de la partie arquée (26) du trou d'ajustement (16) à mettre en engagement avec la partie d'engagement inclinée par rapport à la ligne centrale (O).

**4.** Structure de serrage d'un élément de fixation fileté selon l'une quelconque des revendications 1 à 3,

**caractérisée en ce que**
un diamètre d'un filet de l'élément de fixation fileté (10) n'est pas plus grand que 3 mm.

5. Structure de serrage d'un élément de fixation fileté selon l'une quelconque des revendications 1 à 4,
   **caractérisée en ce que**
   l'élément fileté (10) est pourvu du trou d'ajustement (16), tandis que l'outil de serrage (18) est pourvu de la protubérance d'ajustement (20).

12

16

FIG. 1(a)

16

10

12

14

FIG. 1(b)

FIG. 2(a)

FIG. 2(b)

# FIG. 3(a)

# FIG. 3(b)

**EP 1 536 150 B1**

**REFERENCES CITED IN THE DESCRIPTION**

**Patent documents cited in the description**

- JP 3026965 B